# EUROPÄISCHE PATENTANMELDUNG

(11) **EP 1 219 997 A1**
(43) Veröffentlichungstag der Anmeldung: **03.07.2002**
(21) Anmeldenummer: 00128553.5
(22) Anmeldetag: 27.12.2000
(51) Int. Cl.: G02B 6/44

(54) **Kassette zur Aufnahme von Lichtwellenleiterüberlängen**

(71) Anmelder: FiberCraft Optische Systemtechnik GmbH, 70771 L.-Echterdingen (DE)
(72) Erfinder: Meier, Patrick, 8304 Wallisellen (CH)
(74) Vertreter: Wenger, René

(57) **Zusammenfassung**

Die Kassette (1) weist einen Boden (2) und eine den Boden wenigstens teilweise umgebende und einen Aufnahmeraum (3) begrenzende Seitenwand (4) auf. Die Seitenwand hat wenigstens eine Durchtrittsöffnung (5) für die Durchführung von Kabeladern. Innerhalb des Aufnahmeraums wird mit Hilfe geeigneter Führungselemente (6, 14, 15, 27) eine Führungsbahn (7) definiert, die eine kreuzungsfreie und eine gekreuzte Führung der Lichtwellenleiter ermöglicht. Die Führungsbahn (7) weist sich gegenüberliegende Krümmungen (8, 8') auf, welche durch eine Achse (10) halbiert werden bzw. deren Zentren auf dieser Achse liegen. Die Kreuzungsstelle (9) der Führungsbahn (7) ist zur Optimierung der Leiterführung ausserhalb der Mittelachse (10) angeordnet.

## Beschreibung

Die Erfindung betrifft eine Kassette zur Aufnahme einer Überlänge wenigstens eines Lichtwellenleiters gemäss dem Oberbegriff von Anspruch 1. Derartige Kassetten sind typische Bauteile eines Glasfasernetzes und sie dienen nicht nur der Aufnahme eines bestimmten Faservorrats, sondern auch der Lagerung von Faserspleissen und Faserverzweigungen.

Es sind bereits zahlreiche gattungsmässig vergleichbare Kassetten bekannt geworden, die normalerweise als einstückige Spritzgussteile gefertigt werden. Die Kassetten müssen dabei je nach Anwendungsfall bestimmte Grunderfordernisse erfüllen. So sollten beispielsweise mehrere Kassetten übereinander stapelbar sein und die Lichtwellenleiter innerhalb der Kassette dürfen einen minimalen Biegeradius nicht unterschreiten. Vorzugsweise sollte der Aufnahmeraum auch noch zusätzliche Komponenten für die Fixierung von Spleissverbindungen aufnehmen können. Ein besonderes Problem ist die Einführung und Ausführung der Lichtwellenleiter bzw. der entsprechenden Kabeladern, weil ein Wenden der Lichtwellenleiter nur unter Einhaltung der zulässigen Biegeradien möglich ist.

So zeigt beispielsweise die DE-U-93 17 760.7 eine gattungsmässig vergleichbare Kassette, bei welcher die Kabeladern an den Schmalseiten an je zwei Öffnungen eingeführt und wieder ausgeführt werden können. Ein Wenden der Adern um 180° ist nicht möglich. Auf ähnliche Weise erfolgt die Führung der Lichtwellenleiter gemäss der EP-B-759 180. Auch hier ist ein beliebiges Auskreuzen der Fasern nicht möglich und die gleichen Fasern können somit nicht durch die gleiche Öffnung eingeführt und wieder ausgeführt werden.

Die WO 89/05989 betrifft eine stapelbare Kassette, bei welcher ein Kreuzen der Fasern im Zentrum vorgesehen ist. Die Einführung der Kabeladern ist jedoch nur an zwei gegenüberliegenden Öffnungen an den Längsseiten der Kassette möglich. Ausserdem setzt ein Wenden der Kabelader um 180° voraus, dass nochmals eine volle Schlaufe in der Kassette gelegt wird.

Es ist daher eine Aufgabe der Erfindung, eine Kassette der eingangs genannten Art zu schaffen, die sich vielseitig einsetzen lässt und die insbesondere bei der Einführung und Ausführung der Lichtwellenleiter verschiedene Varianten ermöglicht, ohne den zulässigen Biegeradius zu unterschreiten und ohne unnötige Faserschlaufen zu legen. Ausserdem soll der Aufnahmeraum der Kassette platzsparend ausgebildet sein und die Aufnahme von verschiedene Varianten von Einbaumodulen ermöglichen. Diese Aufgabe wird erfindungsgemäss mit einer Kassette gelöst, welche die Merkmale im Anspruch 1 aufweist.

Es hat sich überraschend gezeigt, dass bezüglich der Führung der Lichtwellenleiter erhebliche Vorteile erzielt werden können, wenn die Kreuzungsstelle der Führungsbahn asymmetrisch nach ausserhalb der Mittelachse verlegt wird, auf denen die gegenüberliegenden Krümmungen liegen. Damit bleibt das Zentrum bzw. der Flächenschwerpunkt frei für die Durchführung von Verbindungsschrauben, Führungselementen oder dergleichen. Andererseits wird dadurch aber auch eine besonders vorteilhafte Krümmung der Führungsbahn mit einem weit ausholenden Radius ermöglicht, sodass eine Kabelader durch die gleiche Einführungsöffnung auch wieder ausgeführt werden kann, ohne dass unnötige Schlaufen gelegt werden müssen. Dabei kann die Führung der Lichtwellenleiter noch dadurch verbessert werden, dass die Führungsbahn wenigstens im Bereich der Kreuzungsstelle ebenfalls gekrümmt verläuft. Zusätzlich kann die sich kreuzende Führungsbahn im Bereich der Achse zwei etwa parallele Abschnitte aufweisen. Daraus ergibt sich insgesamt eine asymmetrische X-Form bei welcher die unteren, längeren Schenkel teilweise parallel verlaufen und dann gekrümmt auseinandergehen und bei welcher die kürzeren oberen Schenkel von der Kreuzungsstelle an direkt gekrümmt auseinandergehen. Die Achse auf denen die Zentren der gegenüberliegenden Krümmungen liegen, braucht nicht zwingend die geometrische Mittelachse der Kassette zu sein. Die erfindungsgemässe Führung der Kreuzungsstelle wirkt sich besonders vorteilhaft bei minimalen zulässigen Biegeradien von mehr als 30 mm aus, wenn gleichzeitig Normabmessungen der Kassette von beispielsweise 92 x 155 x 8 mm eingehalten werden müssen.

Eine besonders platzsparende Anordnung ergibt sich, wenn die Führungsbahn wenigstens im Bereich der Kreuzungsstelle gegenüber einer Aufnahmeebene für die Aufnahme von separaten Einbaumodulen versenkt im Boden angeordnet ist. Auf diese Weise ist es möglich, die Lichtwellenleiter auf platzsparende Weise unter eingebauten Modulen durchzuführen, ohne dass diese mechanisch belastet werden. Insbesondere im Bereich der Kreuzungsstelle ist die Vertiefung von besonderer Bedeutung, weil dort gekreuzte Leiteradern übereinanderliegen. Die vertiefte Führungsbahn könnte auch bei solchen Kassetten zusätzliche Vorteile bringen, bei denen die Kreuzungsstelle nicht asymmetrisch verlegt ist.

Um sicherzustellen, dass die Kabeladern in der vertieften Führungsbahn bleiben, können im Bereich der versenkten Führungsbahn Niederhaltezungen in Bodenebene über der Führungsbahn angeordnet sein. Aber auch ausserhalb der Vertiefung, können im Bereich der Führungsbahn Niederhaltezungen im Abstand zum Boden und parallel zu diesem angeordnet sein.

Vorteilhaft sind am Boden Haltemittel zum Halten von separaten Einbaumodulen einstückig angeordnet. Wenn dabei für jedes Einbaumodul wenigstens zwei im Abstand zueinander angeordnete Haltemittel vorgesehen sind, können die Einbaumodule in ihrer Relativlage derart fixiert werden, dass sie flächig auf dem Boden aufliegen. Dadurch können keine Leiteradern in Zwischenräume eindringen und sich dort verklemmen. Die Haltemittel können derart ausgebildet sein, dass die Einbaumodule eingerastet und/oder festgeschraubt werden können.

Vorzugsweise ist im Bereich der Durchtrittsöffnungen je ein Zugentlastungsmodul mit mehreren Klemmfächern für die Aufnahme von Kabeladern fixierbar. Die Durchtrittsöffnungen befinden sich dabei vorzugsweise an den Schmalseiten im Eckbereich der etwa rechteckigen Kassette. Die Seitenwand der Kassette ist dabei vorzugsweise so ausgestaltet, dass die Durchtrittsöffnungen nach Bedarf ausgebrochen werden können.

Vorteilhaft ist auch über der Kreuzungsstelle und/oder auf der der Kreuzungsstelle gegenüberliegenden Seite der Mittelachse ein Einbaumodul fixierbar. Dabei kann es sich um ein Spleissschutzmodul mit mehreren Aufnahmefächern für Faserspleisse und/oder um ein Schmelzkopplermodul mit mehreren Aufnahmefächern für Schmelzkoppler handeln. Das Schmelzkopplermodul kann dabei ein Grundelement und ein einrastbares Deckelement aufweisen, sodass es selbst eine geschlossene Kassette bildet, welche die Koppler optimal schützt.

Im Boden der Kassette können Öffnungen für die Durchführung von Lichtwellenleitern zu einer tieferliegenden Kassette angeordnet sein. Diese Öffnungen liegen vorteilhaft im Bereich der Führungsbahn und insbesondere im Bereich der Mittelachse.

Eine besonders vielseitige Einsetzbarkeit der Kassette ergibt sich, wenn diese mit gleichartigen Kassetten stapelbar ausgebildet ist und wenn übereinanderliegende Kassetten mittels Schnappverschlüssen verbindbar sind, die eine Schnappnase aufweisen, welche über ein flexibles Filmscharnier einstückig mit der Seitenwand verbunden ist. Die Schnappverschlüsse sind auf diese Weise unverlierbar an den Kassetten gehalten. Ein Stapel von Spleisskassetten kann an einer beliebigen Stelle geöffnet und aufgeklappt werden. Besonders vorteilhaft sind an jeder Längsseite der Kassette je zwei Schnappverschlüsse angeordnet. Bei Kassetten mit grösseren Abmessungen könnten aber auch noch zusätzliche Schnappverschlüsse vorgesehen sein.

Bei den gestapelten Kassetten bildet jeweils der Boden einer Kassette den Abschluss für die darunterliegende Kassette. Die oberste Kassette ist vorteilhaft mit einem Schnappdeckel verschliessbar.

Eine wesentliche Arbeitserleichterung im praktischen Einsatz der Kassette kann erreicht werden, wenn sie ein ausbrechbares Kabelwerkzeug mit einem Kamm zum Einpressen von Kabeladern in die Einbaumodule aufweist. Das Kabelwerkzeug kann dabei in einer Aussparung im Bereich des Zentrums einer der beiden Krümmungen angeordnet sein und die Aussparung kann zusätzlich eine Halterung zum Festhalten des ausgebrochenen Kabelwerkzeugs aufweisen. Die in den Einbaumodulen zu fixierenden Kabeladern haben normalerweise einen sehr geringen Durchmesser von beispielsweise 0,9 mm, was die manuelle Fixierung in den dafür vorgesehenen Aufnahmekanälen erschwert. Mit dem Kamm am Kabelwerkzeug erfolgt die Einpressung der Kabeladern mühelos. Das Kabelwerkzeug ist beim erstmaligen Gebrauch immer vorhanden, weil es einstückig an die Kassette angespritzt wird. Nach dem Ausbrechen kann es in der Halterung abgelegt werden und steht so für spätere Manipulationen zur Verfügung.

Weitere Vorteile und Einzelmerkmale der Erfindung ergeben sich aus der nachfolgenden Beschreibung eines Ausführungsbeispiels und aus den Zeichnungen. Es zeigen:
- Figur 1: eine perspektivische Darstellung einer leeren Kassette,
- Figur 2: die Kassette gemäss Figur 1 mit Einbaumodulen bestückt,
- Figur 3: eine Draufsicht auf die Kassette gemäss Figur 1,
- Figur 4: eine Ansicht von unten der um 180° gedrehten Kassette gemäss Figur 3,
- Figur 5: ein Querschnitt durch die Ebene A-A der Kassette gemäss Figur 3 in vergrösserter Darstellung,
- Figur 6: ein Querschnitt durch die Ebene B-B der Kassette gemäss Figur 3 in vergrösserter Darstellung,
- Figur 7: eine Draufsicht auf die bestückte Kassette gemäss Figur 2,
- Figur 8: eine perspektivische Teilansicht auf zwei gestapelte Kassetten,
- Figur 9: ein Querschnitt durch die Ebene C-C des Stapels gemäss Figur 8,
- Figur 10: eine perspektivische Darstellung der Oberseite eines Schnappdeckels,
- Figur 11: eine Draufsicht auf die Unterseite des Schnappdeckels gemäss Figur 10,
- Figur 12: ein vergrösserter Teilquerschnitt durch die Ebene D-D am Deckel gemäss Figur 10,
- Figur 13: eine perspektivische Darstellung eines Zugentlastungsmoduls,
- Figur 14: eine Seitenansicht des Moduls gemäss Figur 13,
- Figur 15: eine Ansicht von unten auf das Modul gemäss Figur 14,
- Figur 16: eine perspektivische Darstellung eines Spleissschutzmoduls,
- Figur 17: eine Seitenansicht des Moduls gemäss Figur 16,
- Figur 18: eine perspektivische Darstellung eines Schmelzkopplermoduls im geöffneten Zustand,
- Figur 19: eine perspektivische Darstellung des Schmelzkopplermoduls gemäss Figur 18 im geschlossenen Zustand,
- Figur 20: eine Draufsicht auf das Schmelzkopplermodul gemäss Figur 18, und
- Figur 21: eine Darstellung des Kabelwerkzeugs im integrierten und im Ausgebrochenen Zustand.

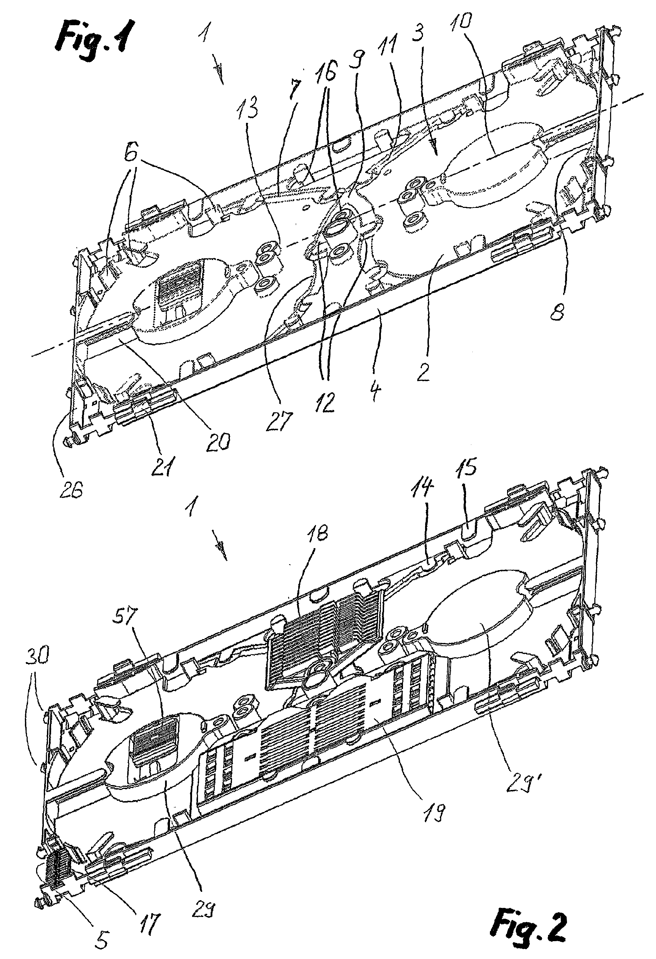

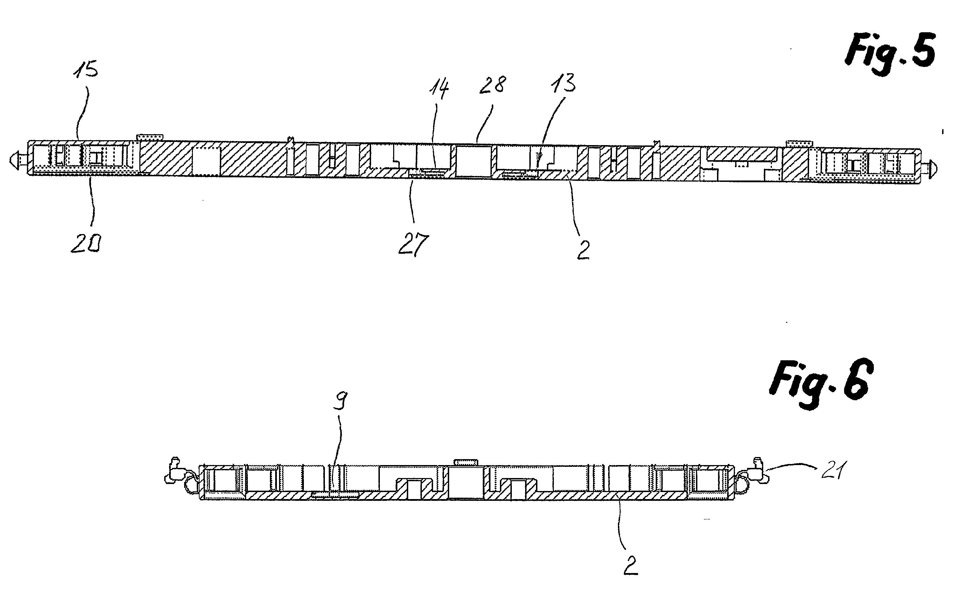

Der grundsätzliche Aufbau der Kassette wird zunächst anhand der Figuren 1 bis 6 erläutert. Demnach besteht die rechteckig ausgebildete Kassette 1 aus einem Boden 2 und aus einer Seitenwand 4, die einen Aufnahmeraum 3 für aufzunehmende Lichtwellenleiter bzw. Adern begrenzt. Die Seitenwand weist wenigstens eine Durchtrittsöffnung 5 auf, um Kabeladern einzuführen. Jede Durchtrittsöffnung kann dabei durch Ausbrechen eines Wandabschnitts 26 gebildet werden, der über Sollbruchstellen mit der restlichen Seitenwand 4 verbunden ist. Bei der dargestellten Kassette sind insgesamt vier ausbrechbare Wandabschnitte in den Eckbereichen vorgesehen, von denen in Figur 2 links unten einer zum Freilegen der Durchtrittsöffnung 5 ausgebrochen wurde.

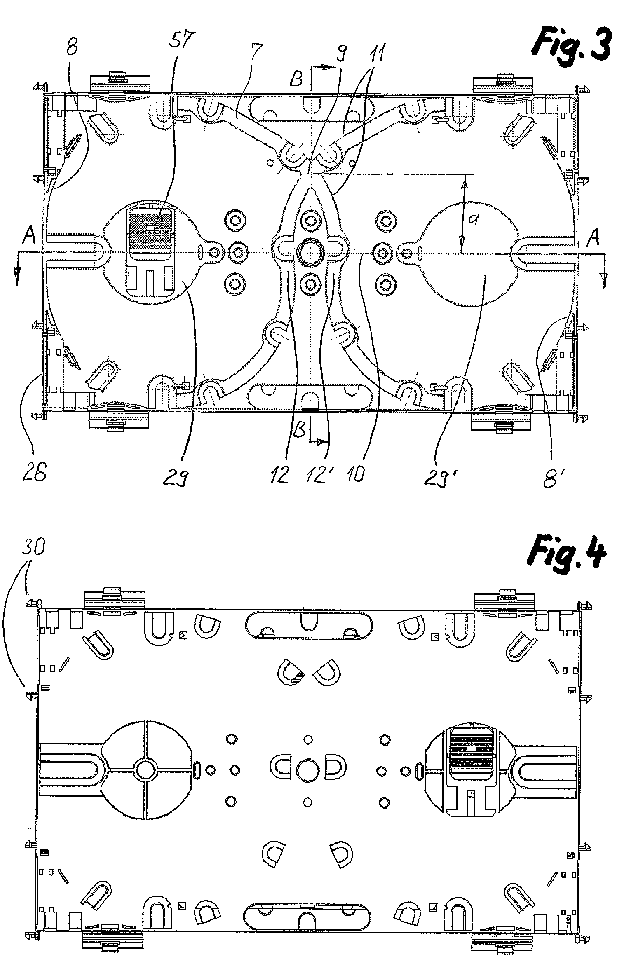

Am Boden 2 der Kassette sind unterschiedlich ausgebildete Führungselemente 6, 12, 15, 27 angeordnet, welche insgesamt eine Führungsbahn 7 definieren. Diese weist zwei sich gegenüberliegende Krümmungen 8 bzw. 8' auf, welche durch eine Achse 10 geteilt werden und sie verläuft entweder oval etwa entlang der Seitenwand 4 oder gekreuzt mit einer Kreuzungsstelle 9. Wie insbesondere aus Figur 3 ersichtlich ist, verläuft die Kreuzungsstelle 9 asymmetrisch im Abstand a zur Achse 10. Ausserdem verläuft die Führungsbahn unmittelbar im benachbarten Bereich der Kreuzungsstelle 9 ebenfalls in einem gekrümmten Abschnitt 11. Dies im Gegensatz zum Bereich der Achse 10, wo zwei annähernd parallele Abschnitte 12, 12' verlaufen.

Die verschiedenen Führungselemente sind ganz unterschiedlich ausgebildet. Sie lassen sich grundsätzlich unterteilen in Führungselemente 6, welche sich bezogen auf eine Aufnahmeebene 13 vertikal vom Boden weg erstrecken, in eine bezogen auf die Aufnahmeebene im Boden ausgebildete Vertiefung 27 und in Niederhaltezungen 14, 15, welche sich etwa parallel zum Boden 2 bzw. zur Aufnahmeebene 13 erstrecken. Im Bereich der Vertiefung 27 verlaufen die Niederhaltezungen 14 in der Bodenebene, während im übrigen Bereich die Niederhaltezungen 15 im Abstand zum Boden angeordnet sind.

Teilweise aus spritzgiesstechnischen Gründen sind am Boden 2 verschiedene Öffnungen angeordnet. Wenigstens zwei grössere Öffnungen 20 im Bereich der Mittelachse 10 dienen dabei der Kabeldurchführung zu einer tiefer liegenden Kassette. Auf dem Boden der Kassette sind auch noch Haltemittel 16 in unterschiedlicher Ausgestaltung angeordnet, welche der Befestigung der nachstehend noch beschriebenen Module dienen. Im Zentrum der Kassette, also praktisch auf dem Flächenschwerpunkt ist eine Nabe 28 mit zentraler Öffnung angeformt. Diese dient beispielsweise dazu, ein ganzes Kassettenpaket in einem Geräteschrank zu fixieren. Im Zentrum der beiden Krümmungen 8, 8' sind ausserdem etwa kreisförmige Formkörper 29, 29' angeordnet, welche den Aufnahmeraum 3 weiter unterteilen.

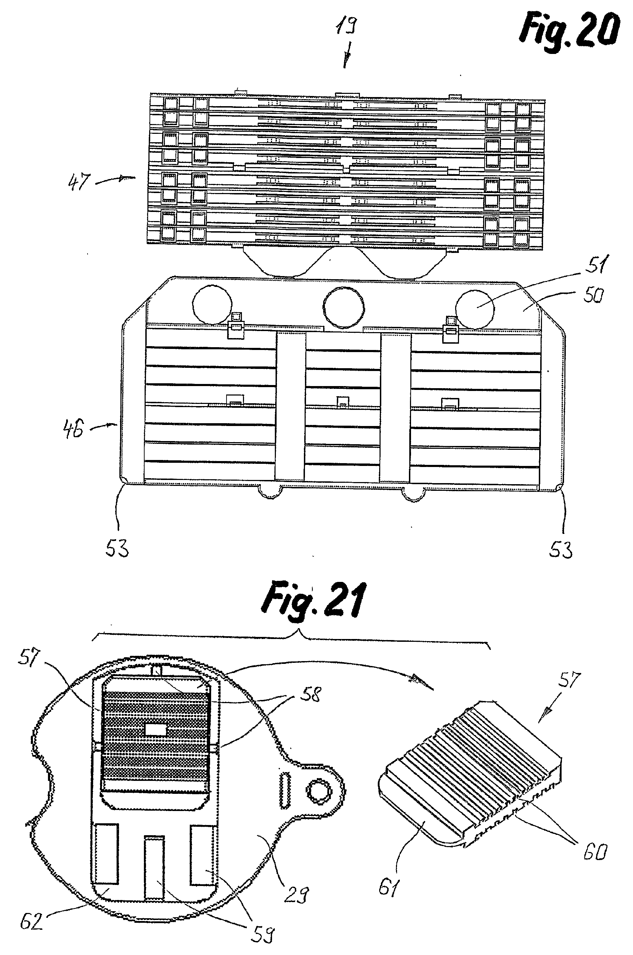

In einem dieser Formkörper 29 ist eine Aussparung 62 vorgesehen, in welcher ein Kabelwerkzeug 57 derart einstückig angeformt ist, dass es ausgebrochen werden kann. Einzelheiten zu diesem Kabelwerkzeug werden nachstehend noch anhand der Figur 21 erläutert.

Im Bereich der Durchtrittsöffnungen 5 bzw. der ausbrechbaren Wandabschnitte 26 sind jeweils noch Schnappkeilpaare 30 angeordnet, die von der Seitenwand 4 nach aussen abstehen. An diesen Schnappkeilpaaren kann ein separater Knickschutz für die eingeführten Kabeladern befestigt werden. Wird ein Knickschutz nicht benötigt oder ist die betreffende Durchtrittsöffnung überhaupt nicht aktiviert, können die Keilpaare abgebrochen werden.

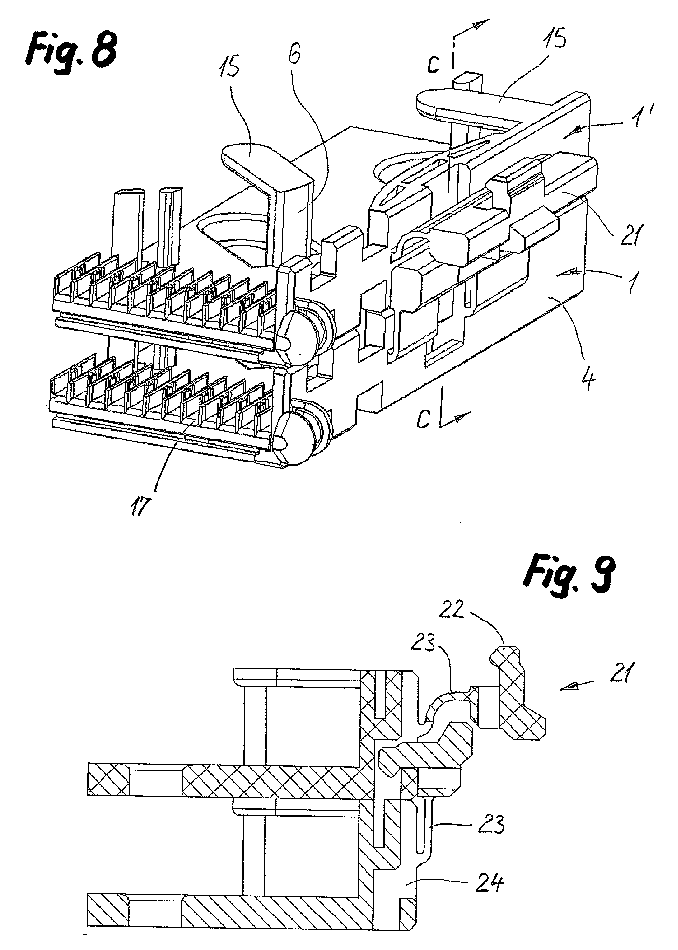

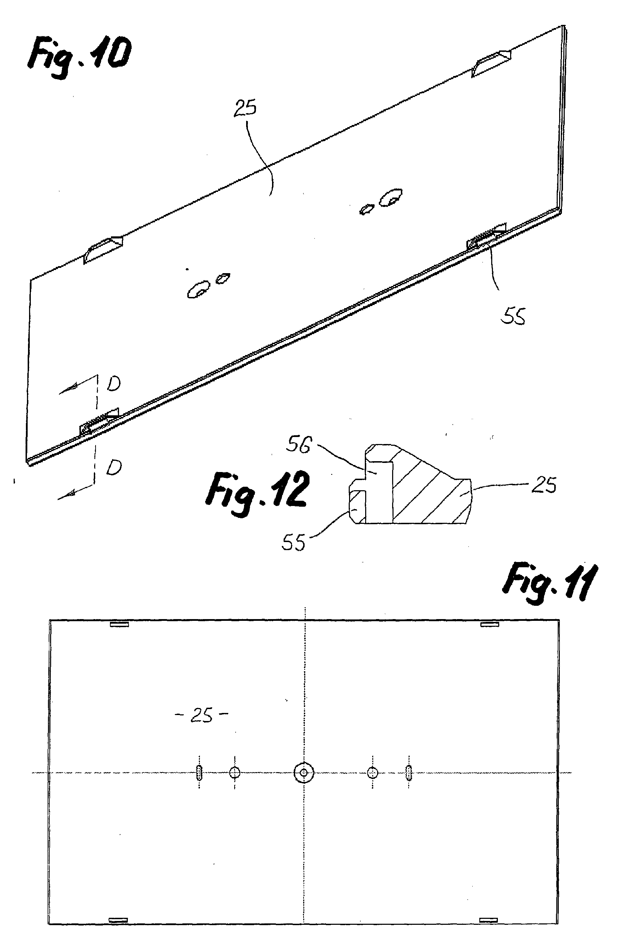

Die Verbindung aufeinander gestapelter Kassetten 1, 1' ist aus den Figuren 8 und 9 ersichtlich. Auf jeder Längsseite einer Kassette sind dabei zwei Schnappverschlüsse 21 vorgesehen. Diese bestehen aus einer Schnappnase 22, die über ein flexibles Filmscharnier 23 mit der Seitenwand 4 verbunden ist. Die Schnappnase kann dabei jeweils in eine Schnappöffnung 24 einer höher gelegenen Kassette eingerastet werden, sodass insgesamt ein stabiles Paket gebildet wird. Selbstverständlich wäre eine Verbindung der Kassetten auch auf andere Weise möglich, z.B. durch separate Filmscharniere, wie sie in der CH-A-674 110 beschrieben sind. Auch separate Halteklammern, Verschraubungen oder Spannbügel wären denkbar.

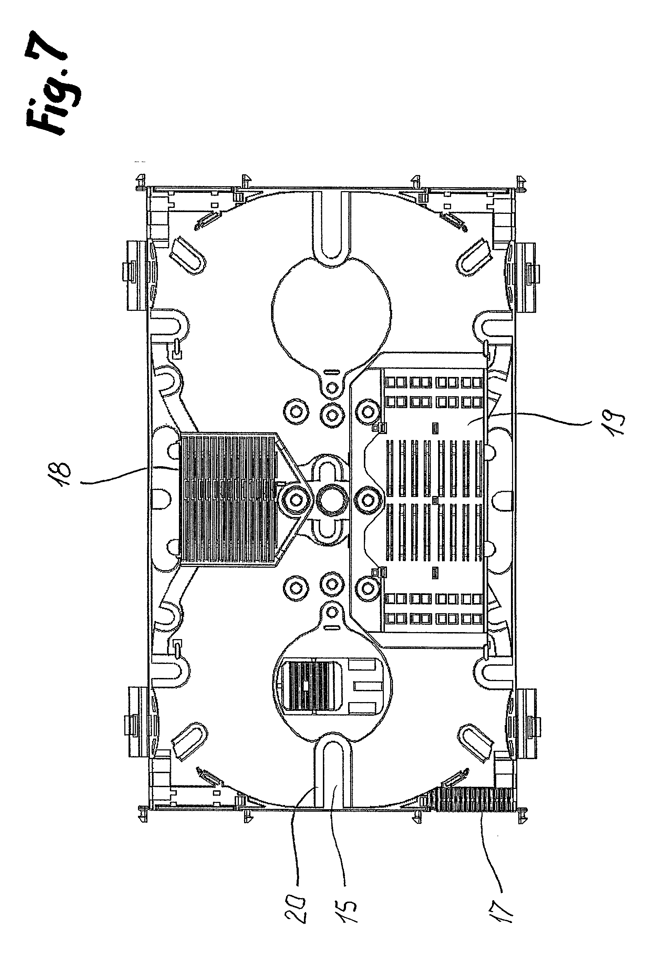

In den Figuren 2 und 7 ist dargestellt, wie eine Kassette je nach Anwendungsfall mit verschiedenen Modulen bestückt werden kann. Im dargestellten Ausführungsbeispiel ist unmittelbar im Bereich der Durchtrittsöffnung 5 ein Zugentlastungsmodul 17 eingerastet. Dieses dient der Zugentlastung der seitlich eingeführten Kabelader. Über der Kreuzungsstelle 9 ist ein Spleissschutzmodul 18 eingerastet. Hier können gespleisste Lichtwellenleiter geordnet und übersichtlich abgelegt werden. Schliesslich ist gegenüber dem Spleissschutzmodul 18 ein Schmelzkopplermodul 19 eingerastet. Im Schmelzkopplermodul können Schmelzkoppler, also Verzweigungen von Lichtwellenleitern geordnet und geschützt abgelegt werden. Bei jedem der genannten Module erfolgt die Einrastung an wenigstens zwei, vorzugsweise drei bis vier im Abstand zueinander angeordneten Haltemitteln 16, sodass der Boden der Module stets flächig auf der Aufnahmeebene 13 aufliegt. Wie bereits erwähnt ist aber zumindest auf jeweils einer Seite auch ein Festschrauben der Module denkbar. Aus diesem Grund sind die Haltemittel 16 teilweise auch mit Schraubenöffnungen versehen.

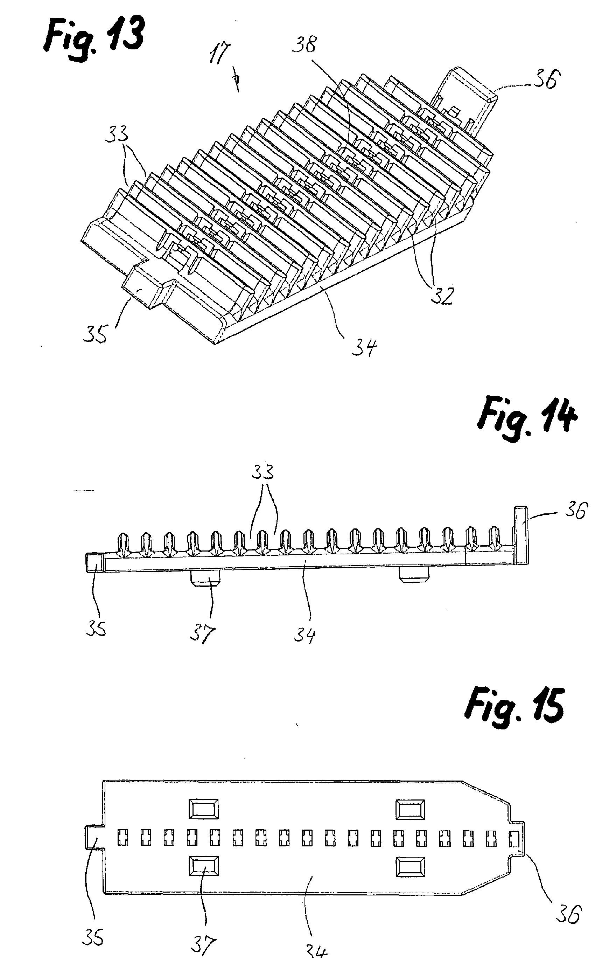

Die Figuren 13 bis 15 zeigen weitere Einzelheiten des Zugentlastungsmoduls 17. Auf einer länglichen Platte 34 sind parallele Rippen 32 angeordnet, welche zwischen sich nach oben offene Fächer 33 bilden. In jedem dieser Fächer ist durch geeignete Materialvorsprünge ein Klemmlabyrinth 38 gebildet, in dem eine Kabelader klemmend aufgenommen werden kann, wobei die Klemmkraft gross genug ist, um eine Zugentlastung herbeizuführen, ohne die empfindliche Faser zu beschädigen. An den beiden Enden der Platte 34 ist je eine kleine Klemmnase 35 und eine grosse Klemmnase 36 angeordnet. Ausserdem sind am Boden der Platte noch vier Füsse 37 angeordnet. Die Klemmnasen 34 und 36 können an korrespondierenden Einrastmitteln in der Kassette verspannt werden, während die Füsse 37 in korrespondierende Öffnungen im Boden der Kassette eindringen und das Zugentlastungsmodul lagemässig positionieren.

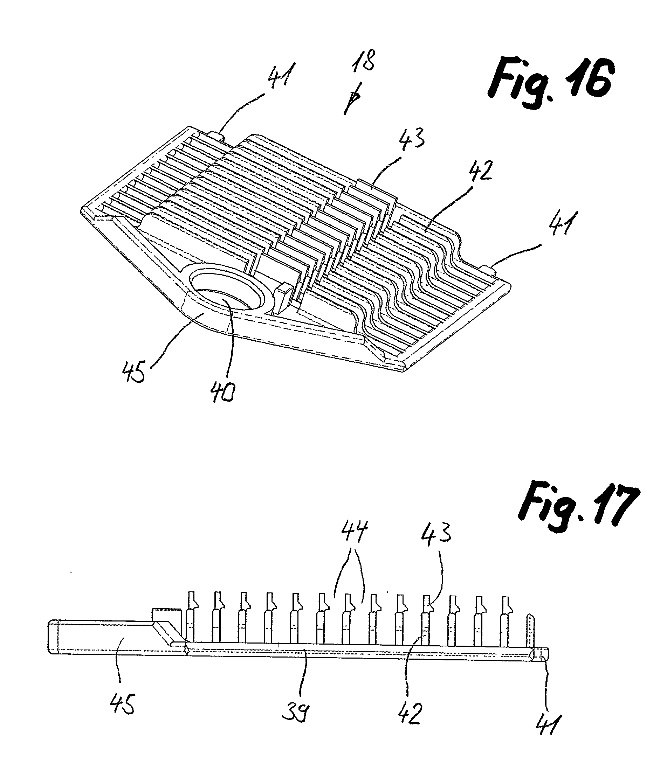

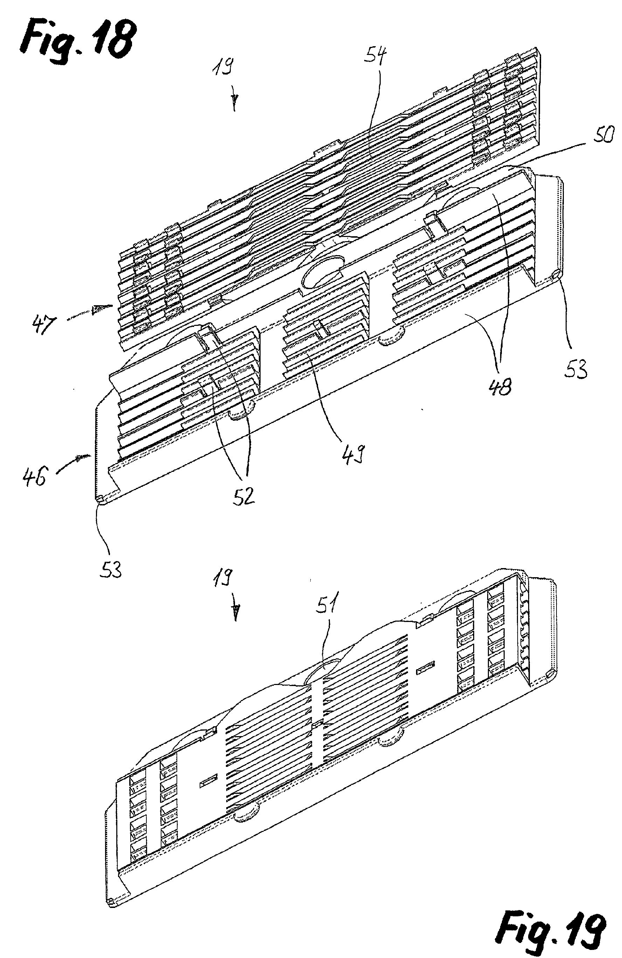

Die Figuren 16 und 17 zeigen Details eines Spleissschutzmoduls 18. Auch dieses ist wie die übrigen Bauteile als einstückiges Spritzgussteil ausgebildet und weist eine Platte 39 auf, die mit starren Rippen 42 und flexiblen Rippen 43 bestückt ist. Diese Rippen bilden Fächer 44, in welche die Spleisse abgelegt werden können. Die flexiblen Rippen 43 übernehmen dabei die Haltefunktion. Auf einer Seite der Platte ist ein Flansch 45 mit einer Öffnung 40 angeordnet. An der gegenüberliegenden Längsseite weist die Platte 39 Klemmnocken 41 auf. Die Öffnung 40 und die Klemmnocken 41 dienen wiederum der Fixierung des Spleissschutzmoduls an korrespondierenden Einrastmitteln 16 in der Kassette.

Die Figuren 18 bis 20 zeigen Einzelheiten eines insgesamt mit 19 bezeichneten Schmelzkopplermoduls. Dieses besteht aus zwei Teilen nämlich aus einem Grundelement 46 und einem Deckelement 47. Diese beiden Elemente werden zusammenhängend im gleichen Werkzeug hergestellt und können durch Brechen voneinander getrennt werden. Das Grundelement 46 verfügt über parallele Seitenwände 48, zwischen denen ebenfalls ein System von Längsrippen 49 angeordnet ist. An einzelnen Stellen sind zudem federnde Klinken 52 angeordnet, die der Fixierung des Deckelements 47 dienen. Auf einer Längsseite des Grundelements 46 ist eine Seitenleiste 50 mit Öffnungen 51 angeordnet. Auf der gegenüberliegenden Längsseite sind Ecken 53 angeordnet. Die Öffnungen 51 und die Ecken 53 dienen der Befestigung in korrespondierende Haltemittel der Kassette.

Das Deckelement 47 weist Rippen 54 auf, welche mit den Rippen 49 des Grundelements korrespondieren und auf diese Weise Kammern zur Aufnahme der Schmelzkoppler bilden.

Die Figuren 10 bis 12 zeigen einen Schnappdeckel 25, der mit insgesamt vier Rastleisten 55 versehen ist. Wie Figur 12 zeigt, weisen diese Rastleisten je eine Rastöffnung 56 auf, welche korrespondierende Rastnocken an der Kassette aufnehmen können.

Figur 21 zeigt auf der linken Seite eine Draufsicht auf einen Formkörper 29 (gemäss Figur 2), der mit einer Aussparung 62 versehen ist. In dieser Aussparung ist über Sollbruchstellen 58 ein Kabelwerkzeug 57 gehalten, das manuell herausgebrochen werden kann. Das Kabelwerkzeug verfügt über zwei parallele gerippte Oberflächen 60 und über einen Kamm 61. Mit diesem Kamm können Kabeladern in die dafür vorgesehen Module eingepresst werden. Nach Gebrauch kann das Kabelwerkzeug 57 in eine Halterung 59 eingesteckt werden, die aus seitlich in der Aussparung angeordneten Auflagen bzw. aus einer federnden Zunge im Zentrum besteht.

## Patentansprüche

1. Kassette (1) zur Aufnahme einer Überlänge wenigstens eines Lichtwellenleiters, mit einem Boden (2) und mit einer den Boden wenigstens teilweise umgebenden und einen Aufnahmeraum (3) begrenzenden Seitenwand (4), welche wenigstens eine Durchtrittsöffnung (5) für den Lichtwellenleiter aufweist, wobei im Aufnahmeraum Führungselemente (6) derart angeordnet sind, dass sie für die Führung der Überlänge sowohl eine kreuzungsfreie, als auch eine gekreuzte Führungsbahn (7) mit sich gegenüberliegenden Krümmungen (8, 8') definieren, **dadurch gekennzeichnet, dass** die Kreuzungsstelle (9) der Führungsbahn (7) ausserhalb einer die beiden Krümmungen (8, 8') halbierenden Achse (10) liegt.

2. Kassette nach Anspruch 1, **dadurch gekennzeichnet, dass** die Führungsbahn (7) wenigstens im Bereich der Kreuzungsstelle (9) ebenfalls gekrümmt verläuft.

3. Kassette nach Anspruch 2, **dadurch gekennzeichnet, dass** die sich kreuzende Führungsbahn im Bereich der Achse (10) zwei etwa parallele Abschnitte (12, 12') aufweist.

4. Kassette insbesondere nach einem der Ansprüche 1 bis 3, **dadurch gekennzeichnet, dass** die Führungsbahn (7) wenigstens im Bereich der Kreuzungsstelle (9) gegenüber einer Aufnahmeebene (13) für die Aufnahme separater Einbaumodule (18, 19) versenkt im Boden (2) angeordnet ist.

5. Kassette nach Anspruch 4, **dadurch gekennzeichnet, dass** im Bereich der versenkten Führungsbahn (7) Niederhaltezungen (14) in Bodenebene über der Führungsbahn angeordnet sind.

6. Kassette nach einem der Ansprüche 1 bis 5, **dadurch gekennzeichnet, dass** im Bereich der Führungsbahn (7) Niederhaltezungen (15) im Abstand zum Boden und parallel zu diesem angeordnet sind.

7. Kassette nach einem der Ansprüche 1 bis 6, **dadurch gekennzeichnet, dass** am Boden (2) Haltemittel (16) zum Halten von separaten Einbaumodulen (17, 18, 19) einstückig angeordnet sind.

8. Kassette nach Anspruch 7, **dadurch gekennzeichnet, dass** für jedes Einbaumodul wenigstens zwei im Abstand zueinander angeordnete Haltemittel angeordnet sind.

9. Kassette nach Anspruch 7 oder 8, **dadurch gekennzeichnet, dass** im Bereich der Durchtrittsöffnung (5) ein Zugentlastungsmodul (17) mit mehreren Klemmfächern für die Aufnahme von Kabeladern fixierbar ist.

10. Kassette nach Anspruch 7 oder 8, **dadurch gekennzeichnet, dass** über der Kreuzungsstelle (9) ein Einbaumodul fixierbar ist.

11. Kassette nach Anspruch 7 oder 8, **dadurch gekennzeichnet, dass** auf der der Kreuzungsstelle gegenüberliegenden Seite der Mittelachse (10) ein Einbaumodul fixierbar ist.

12. Kassette nach Anspruch 10 oder 11, **dadurch gekennzeichnet, dass** das Einbaumodul ein Spleissschutzmodul (18) mit mehreren Aufnahmefächern für Faserspleisse ist.

13. Kassette nach Anspruch 10 oder 11, **dadurch gekennzeichnet, dass** das Einbaumodul ein Schmelzkopplermodul (19) mit mehreren Aufnahmefächern für Schmelzkoppler ist.

14. Kassette nach Anspruch 13, **dadurch gekennzeichnet, dass** das Schmelzkopplermodul ein Grundelement (46) und ein einrastbares Deckelement (47) aufweist.

15. Kassette nach einem der Ansprüche 1 bis 14, **dadurch gekennzeichnet, dass** im Boden Öffnungen (20) für die Durchführung von Lichtwellenleitern zu einer tieferliegenden Kassette angeordnet sind.

16. Kassette nach einem der Ansprüche 1 bis 15, **dadurch gekennzeichnet, dass** sie mit gleichartigen Kassetten stapelbar ausgebildet ist und dass übereinanderliegende Kassetten mittels Schnappverschlüssen (21) verbindbar sind, die eine Schnapnase (22) aufweisen, welche über ein flexibles Filmscharnier (23) einstückig mit der Seitenwand (4) verbunden ist.

17. Kassette nach einem der Ansprüche 1 bis 16, **dadurch gekennzeichnet, dass** sie mit einem Schnappdeckel (25) verschliessbar ist.

18. Kassette nach einem der Ansprüche 1 bis 17, **dadurch gekennzeichnet, dass** sie ein ausbrechbares Kabelwerkzeug (57) mit einem Kamm (61) zum Einpressen von Kabeladern in die Einbaumodule aufweist.

19. Kassette nach Anspruch 18, **dadurch gekennzeichnet, dass** das Kabelwerkzeug in einer Aussparung (62) im Bereich des Zentrums einer der beiden Krümmungen (8, 8') angeordnet ist und dass die Aussparung eine Halterung (59) zum Festhalten des ausgebrochenen Kabelwerkzeugs aufweist.
